# EUROPEAN PATENT APPLICATION

(11) **EP 1 207 687 A1**
(43) Date of publication of application: **22.05.2002**
(21) Application number: 01309376.0
(22) Date of filing: 06.11.2001
(51) Int. Cl.: H04N 5/225, H04N 5/238

(54) **Image sensing apparatus**

(30) Priority: 16.11.2000 JP 2000349197
(71) Applicant: VICTOR COMPANY OF JAPAN LIMITED, Yokohama-Shi Kanagawa-Ken (JP)
(72) Inventor: kimura, Kazuo, Kanazawa-ku, Yokohama-shi, Kanagawa-ken (JP)
(74) Representative: Butcher, Ian James

(57) **Abstract**

An image sensing apparatus for converting an object image into a video signal, including an diffraction grating optical low-pass filter having a diffraction grating surface (1h) for suppressing a fake signal caused by an interference of the pixel pitch of CCD (1i) and spatial frequency of the object image under high luminance condition. A control device (1n) incorporated in the image sensing apparatus controls the speed of electrical shutter of the CCD (1i) or it controls the insertion of an ND (Neutral Density) filter in an object image light path (3) to maintain the aperture of an iris device (1k) within the predetermined level to keep the aperture of an iris (1k) within a predetermined level in order to suppress the interference of the pixel pitch of CCD and the spatial frequency of the object image so that the fake signal can be suppressed.

## Description

### BACKGROUND OF THE INVENTION

### Field of the Invention:

The present invention relates to an image sensing apparatus preferable for use in a video camera, particularly, relates to an image sensing apparatus having an optical low pass filter with diffraction grating for suppressing a fake signal which is a sampling noise caused by an interference of a certain spatial frequency of an image object to a pixel pitch of an image sensor.

### Description of the Related Art:

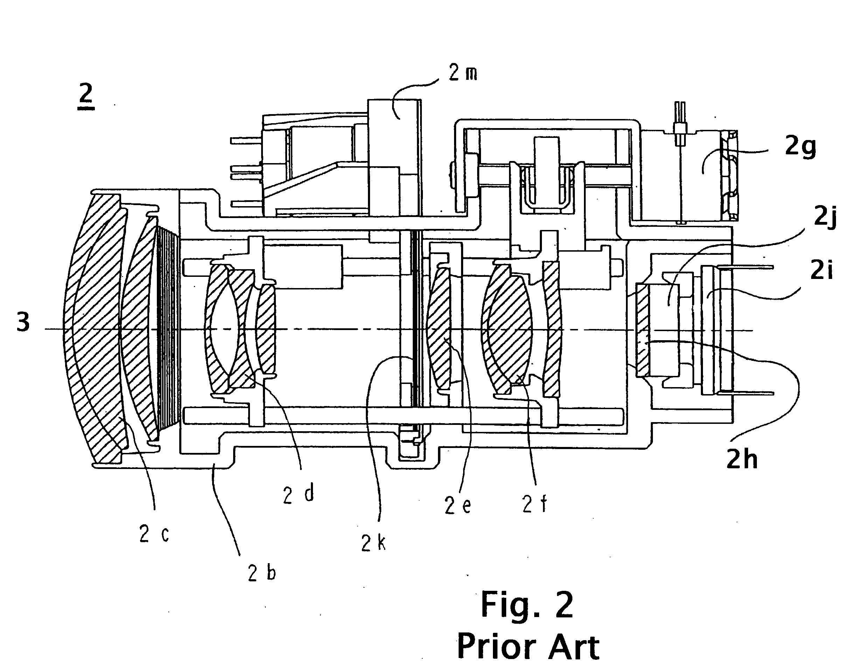

Fig. 2 is a cross-sectional view of an image sensing apparatus in accordance with a related art. In Fig. 2, the image sensing apparatus 2 is composed of a body 2b, a first lens group 2c constituting a field lens which is stabilized in the image sensing apparatus 2, a second lens group 2d for zooming an object image by moving the lenses towards the direction of an optical axis 3 of the object image, a third lens group 2e for focusing the object image which is stabilized in the image sensing apparatus 2, a fourth lens group 2f for focusing the object image by moving the lenses towards the direction of the optical axis 3 of the object image, a stepping motor 2g for driving the fourth lens group 2f, an optical low-pass filter 2h having birefringence and high light transmittance, an image sensor 2i such as a CCD (charged coupled device), hereinafter referred to as "CCD 2i", for converting the object image into a video signal, a filter (hereinafter referred to as "IR filter") 2j attached to the optical low-pass filter 2h for absorbing infrared light to compensate sensitivity of the CCD 2i, and an iris 2k for controlling a cross-sectional area of the light beam of the object image radiated into the third lens group 2e, and an iris motor 2m for adjusting the aperture of the iris 2k.

The first lens group 2c, the second lens group 2d and the fourth lens group 2f are composed of three lenses respectively and the third lens group 2e is composed of single lens.

The image sensing apparatus 2 is, for example, incorporated in a video camera with other elements not shown in Fig. 2, such as a signal processing device for an electronic signal, a recording and reproducing device for recording or reproducing a video signal in or from a magnetic tape medium, a viewfinder device for monitoring the object image, and an iris control for controlling the iris motor 2m for driving the iris 2k to keep constant luminance of an object image upon the change of light intensity.

The operation of the image sensing apparatus 2 is described as follows. A light beam of an object image will come through the first lens group 2c, the second lens group 2d, the iris 2k, the third lens group 2e, the fourth lens group 2f and the optical low-pass filter 2h as the optical axis 3.

The optical low-pass filter 2h is made of material such as a synthetic quartz crystal having birefringence and high light transmittance, and separates an irregular light of which light path is spatially discrete from an ordinary light.

When the object image has a spatial frequency approximate to the pixel order pitch of the CCD 2i, a fake signal appears in the video signal as a sampling noise. For example, a picture image having very detailed texture will appear to have the fake signal (such as pseudo color) on the silhouette border line of the image through the CCD 2i.

The width of the separation of image light is specified in accordance with the pixel pitch of the CCD 2i. The separation will cause defocus of the image so that the sampling noise caused by an interference of the spatial frequency of the object light to the pixel pitch can be suppressed.

The IR filter 2j selectively absorbs the light having a wavelength of infrared so that the image formed on the CCD 2i does not include unnecessary light having a wavelength of infrared. Accordingly, the wavelength sensitivity for the CCD 2i will be compensated to the characteristics close to human visual characteristics, and the quality of image signal can be improved.

The CCD 2i outputs a video signal by converting the image formed on the photoelectric conversion surface of the CCD 2i into the video signal, and supplies such the signal to the signal processing device not shown.

The signal processing device provides input signal to a recording device not shown such as a magnetic tape through a predetermined signal processing, and detects a luminance level of the input signal. When the luminance level for the object image is higher than a predetermined value, a control order of "iris close" is supplied to the iris control device not shown therefrom to close the aperture of the iris 2k and decrease the luminance of the image.

Further, when the luminance level is lower than the predetermined level, a control order of "iris open" is supplied to the iris control device to open the aperture of the iris 2k and increase the luminance of the image.

The iris control device changes the electric current to be supplied to the iris motor 2m in response to the control order such as "iris close" or "iris open". As a result, the balance position of rotation power for the iris motor 2m and a rotation spring of the iris 2k not shown will change that the aperture of the iris 2k changes so as to obtain a luminance value of an object image within the predetermined scope.

In view of recent depreciation of video cameras and need of miniaturization of circuitry, the component parts for the video camera should be designed with low cost parts and with smaller circuit size. As described above, the optical low-pass filter 2h is made of birefringence material such as synthetic quartz crystal to minimize the fake signal of the object image. This type of filter is rather expensive and is difficult to be incorporated in smaller circuit size.

In addition, crystal in nature resource utilized for the raw material of synthetic quartz crystal is decreasing and it is estimated that such the material will be difficult to obtain in the future.

Accordingly, an optical low-pass filter with diffraction grating (hereinafter referred to as "diffractional optical LPF") is provided for blocking spatial frequency of the object image in substitution for the optical low-pass filter.

The diffractional optical LPF is formed by attaching a plastic material having a light transmittance being formed with a diffraction grating on an infrared absorbing filter. Otherwise, the material attached to the infrared absorbing filter can be a transparent plastic material including copper ion (such as "Lumicle UCF" by Kureha Chemical Industry Co., Ltd.), being formed with a diffraction grating on its surface.

Each light beam passing through the peaks and troughs of the diffraction grating on the diffractional optical LPF causes phase difference, and consequently, the high-pass element of the object image on CCD 2i is suppressed that low-pass element of the light beam can be passed through the filter.

In case that the video camera having the diffractional optical LPF is sensing an object image in the open air, the iris 2k narrows down since the object in the open air has high light intensity. In this sense, as the iris 2k is closing, the diameter of light beam of object image passing through the iris becomes close to the pitch of the diffraction grating of the LPF. Accordingly, the light beam passing through the diffraction grating becomes less, and the diffraction of light can not be obtained sufficiently.

As this happens, the suppression of spatial frequency of the object image becomes insufficient that the fake signal may appear to the image signal as stripes having different luminance in the viewer or display, which is a problem to quality of video image through the image sensing apparatus. This would happen remarkably when the aperture level is more than F1:8.

The image sensing apparatus having the diffractional optical LPF is preferable for low cost and miniaturized image sensing apparatus compared to the image sensing apparatus having the birefringence LPF. However, the image sensing apparatus having the diffractional optical LPF can not prevent a fake signal in the object image when the object has high light intensity in the open air.

### SUMMARY OF THE INVENTION

Accordingly, in consideration of the above-mentioned problems of the related art, in order to achieve the above object, the present invention provides, according to an aspect thereof, an image sensing apparatus for converting an object image into a video signal, which comprises an image lens for obtaining an object image, an image sensing means having an electrical shutter for capturing the object image to convert it into the video signal, an iris means provided in front of the image sensing means capable of controlling an aperture for the object image to maintain the luminance of the object image on an image sensing surface of the image sensing means coming through the image lens within a predetermined level, a diffraction grating optical low-pass filter for providing birefringence of the object image, and for limiting a spatial frequency of the object image being obtained by the image lens, and a control means for preventing the optical low-pass filter from deteriorating functionality of diffraction by controlling the speed of the electrical shutter to keep the aperture of the iris means at the predetermined value.

Other object and further features of the present invention will be apparent from the following detailed description when read in conjunction with the accompanying drawings.

### BRIEF DESCRIPTION OF DRAWINGS

Fig. 1 is a cross-sectional view of an image sensing apparatus according to an embodiment of the present invention.
Fig. 2 is a cross-sectional view of an image sensing apparatus according to the prior art.

### DETAILED DESCRIPTION OF THE PREFERRED EMBODIMENTS

The present invention provides an image sensing apparatus for having a control means to control the speed of a shutter in response to luminance level of an object image that an aperture value becomes more than predetermined value so that the functionality of an optical low-pass filter can be maintained and the circuitry can be composed in smaller circuit size with low cost component parts.

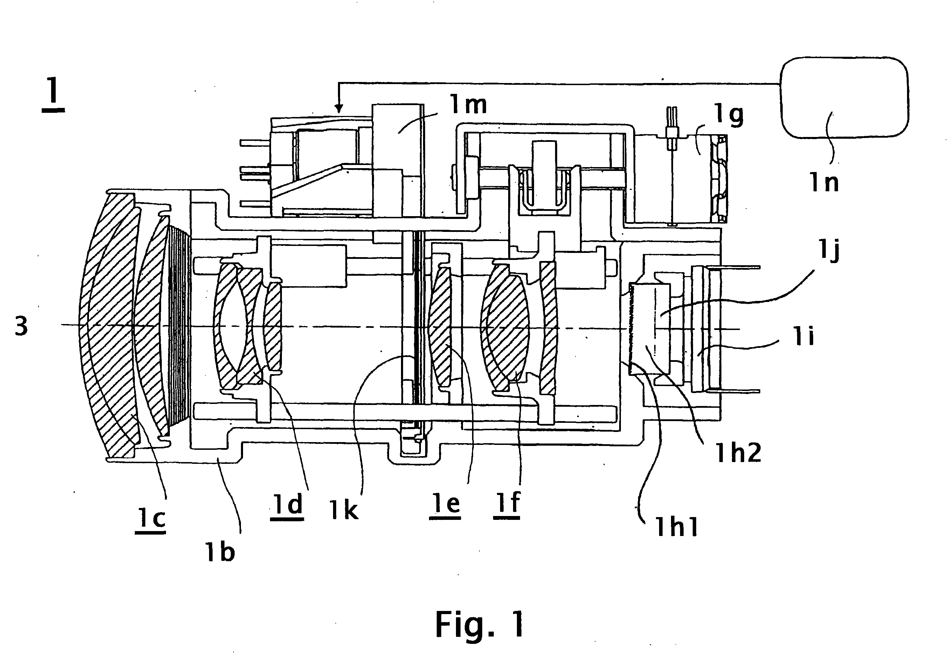

Fig. 1 is a cross-sectional view of an image sensing apparatus in accordance with the present invention. In Fig. 1, an image sensing apparatus 1a is composed of a body 1b, a first lens group 1c constituting a field lens, a second lens group 1d for zooming an object image, a third lens group 1e for focusing the object image, a fourth lens group 1f for focusing the object image, a stepping motor 1g for driving the fourth lens group 1f, an image sensor 1i such as CCD (charged coupled device) hereinafter referred to as "CCD 1i" for converting the optical image into a video signal, an iris 1k for controlling a cross-sectional area of light beam of the object light radiated into the third lens group 1e, and an iris motor 1m for driving the iris 1k. Fig. 1 also indicates a light path 3 of the object image coming through the lens groups 1c, 1d, 1e and 1f of the image sensing apparatus 1.

The image sensing apparatus 1 further composed of an optical low-pass filter 1h2 having a diffraction grating surface 1h1 (hereinafter referred to as "diffractional optical LPF 1h"), a filter 1j for absorbing infrared element of the light and for being attached to the diffractional optical LPF 1h (hereinafter referred to as "IR filter"), a microprocessor 1n for controlling a signal processing not shown and an iris controlling device not shown.

The first lens group 1c, the second lens group 1d and the fourth lens group 1f are composed of three lenses and the third lens group 1e is composed of single lens.

The operation of the image sensing apparatus 1a is described as follows. A light beam of the object image will take the light path 3 and come through the first lens group 1c, the second lens group 1d, the iris 1k, the third lens group 1e, the fourth lens group 1f to reach the diffractional optical LPF 1h. The diffractional optical LPF 1h is made of plastic material having light transmittance and is attached to the IR filter 1j. The object image is outputted to the CCD 1i and converted into a video signal.

The diffractional optical LPF 1h described above is incorporated in front of the CCD 1i but the position of the diffractional optical LPF 1h is not limited to the position shown in Fig. 1 that it can be placed between either lens groups 1c, 1f and 1e. Further, the diffractional optical LPF 1h is described as being formed together with the diffraction grating surface 1h1. However, as long as the diffractional optical LPF 1h is incorporated in front of the CCD 1i before it captures the object image, the diffractional optical LPF 1h can be separated with the portion of the diffraction grating surface 1h1 and the portion of the optical LPF 1h2 under minor change of the design specification.

The image sensing apparatus 1 is incorporated in, for example, a video camera with other elements not shown in Fig. 1, such as a signal processing device, a recording and reproducing device, a viewfinder device and iris control device and others. The signal processing device carries out various signal processing for the video signal converted from the object image and outputs the video signal to the recording and reproducing device for recording or reproducing the video signal in or from a magnetic tape medium. The video signal is also outputted to the viewfinder device for monitoring the object image, and to the iris control device for controlling the iris motor 1m.

The iris motor 1m is composed of a rotor not shown for rotating in response to driving current with a hall element not shown. The hall element outputs hall current representing a value depending on the rotation angle of the rotor in the magnetic field inside the iris motor 1m to the microprocessor 1n. The microprocessor In converts the hall current in analog-to-digital, and detects the aperture of the iris 1k by comparing such hall current with a predetermined conversion table.

In case the aperture value of the iris 1k becomes close to a predetermined value, the electronic shutter for CCD 1i switches from normal 1/60 seconds to faster 1/250 seconds.

The predetermined value for aperture as described above is the aperture value which is close to the pitch of the diffraction grating of the optical LPF 1h2 and may cause insufficient diffraction functionality.

The speed of the electronic shutter is an accumulation time of an electrical charge under the photo-electrical conversion of the object image to the video signal in the CCD 1i. As the electronic shutter becomes faster, the accumulation time of electrical charge becomes shorter that the luminance level of the video signal becomes lower.

As the luminance level of the video signal becomes lower due to the change of speed of the electrical shutter from normal 1/60 seconds to 1/250 seconds, the signal processing device outputs a control signal to iris controlling device to open the aperture of the iris 2k to let the luminance level of the video signal becomes within the predetermined value. As a result, the insufficient diffraction at the diffractional optical LPF 1h can be prevented.

In an event that the light condition of the object changes that the illumination of the object is lower enough and the electrical shutter at the speed 1/60 seconds would not impact the luminance level of the object image, then the microprocessor 1n puts back the speed of electrical shutter into normal 1/60 seconds. In an event that illumination of the object becomes higher and the speed of electrical shutter of 1/250 seconds can not control the illumination of the object within the predetermined level, then the microprocessor 2n sets the speed of electrical shutter into even more faster speed (such as 1/500 sec. or 1/1000 sec.).

The problem is that the aperture of the iris 2k becomes close to the pitch of the diffraction grating of the optical LPF 1h2. Accordingly, the present invention provides the image sensing apparatus 1a for controlling the speed of electrical shutter of the CCD 2i to make the aperture of the iris 2k not to become close to the pitch of the diffraction grating of the optical LPF 1h2.

Another structure of the image sensing apparatus 1 is to provide with a filter device (not shown) inserted vertically in the light path 3 of the object image. The filter device is composed of ND (Neutral Density) filter, which absorbs the light to keep the light intensity under predetermined level so that the insufficient diffraction can be suppressed. The filter device will be inserted or removed from the light path 3 mechanically, by control of microprocessor 1n. The insertion position of the filter device is preferably set close to the iris 2k but it is not limited to such position.

The microprocessor 1n will detect the aperture of the iris 1k. If it detects too much light being exposed to the CCD 1i, it controls the insertion of the filter device. If not, the filter device will be removed or the aperture of the iris 2k will be controlled to keep the light intensity of object image at predetermined level.

In addition, the insertion of the filter device can be controlled either automatically or manually.

The filter device may have more than one filter having different transmittance to be used under various different light condition of the object.

Controlling speed of the shutter may cause a smear noise in the video signal at the some extent of shutter speed but such the noise can be suppressed by using the filter means as described above.

Another structure of the image sensing apparatus 1a is that it may have the microprocessor 2n for controlling the speed of shutter and the insertion of the filter device described above to keep the amount of object light at predetermined level.

The image sensing apparatus 1a described above is not limited to be used for video camera but also for digital still camera or professional video camera which has an image sensor such as CCD, with numerous pixel and the image sensing apparatus of the present invention can be applied to all of these image sensing apparatus.

As described above, the present invention is to provide the image sensing apparatus having the control device to control the speed of the shutter in response to the luminance level of the object signal that the aperture value becomes more than predetermined value so that the functionality of an optical LPF can be maintained and the circuitry can be composed in smaller circuit size with low cost component parts.

## Claims

1. An image sensing apparatus for converting an object image into a video signal, comprising:
an image lens for obtaining an object image;
an image sensing means having an electrical shutter for capturing the object image to convert it into the video signal;
an iris means provided in front of the image sensing means capable of controlling an aperture for the object image to maintain the luminance of the object image on an image sensing surface of the image sensing means coming through the image lens within a predetermined level;
a diffraction grating optical low-pass filter for providing birefringence of the object image, and for limiting a spatial frequency of the object image being obtained by the image lens; and
a control means for preventing the optical low-pass filter from deteriorating functionality of diffraction by controlling the speed of the electrical shutter to keep the aperture of the iris means at the predetermined value.

2. The image sensing apparatus as claimed in Claim 1, further comprises a Neutral Density filter to be inserted in the light path of the object image for maintaining the aperture of the iris means to be more than predetermined level.
